# EUROPEAN PATENT SPECIFICATION

(11) **EP 3 298 669 B1**
(45) Date of publication and mention of the grant of the patent: **15.09.2021**
(21) Application number: 16727834.0
(22) Date of filing: 18.05.2016
(51) Int. Cl.: H02G 3/22

(54) **PROBE FEEDTHROUGH DESIGN**
SONDENDURCHFÜHRUNGSDESIGN
CONCEPTION DE TRAVERSÉE DE SONDE

(30) Priority: 21.05.2015 US 201562164781 P
(43) Date of publication of application: 28.03.2018
(73) Proprietor: Flisom AG, 8155 Niederhasli (CH)
(72) Inventor: RUEHLE, Ulfert, 8600 Duebendorf (CH); RIESSLAND, Alexander, 7320 Sargans (CH); EHRENSPERGER, Damien, 8603 Schwerzenback (CH)
(86) International application number: PCT/IB2016/000668
(87) International publication number: WO 2016/185268

(56) References cited:
- DE-A1- 2 754 055
- US-A- 3 563 575
- US-A- 4 277 197
- US-A- 4 457 541
- Fiberguide Industries: "Vacuum and pressure Feedthroughs", , 14 June 2013 (2013-06-14), XP055658250, Retrieved from the Internet: URL:https://www.tem-inc.co.jp/products/pdf /product004000-pdf19.pdf [retrieved on 2020-01-15]

## Description

### BACKGROUND

### Technical Field

The present disclosure relates to the field of feedthroughs enabling passage or installation of devices from a volume at a first atmospheric pressure to a volume at a second atmospheric pressure, such as negative pressures or vacuum.

### Description of Related Art

Feedthroughs, also known as sealing glands, are devices ordinarily enabling the passage or installation of probes, such as cables, pipes, wires or rods, for example thermocouples, through a wall body separating two environments. The environments may, for example, be maintained at different atmospheric pressures. For example, a feedthrough may provide a sealed passage for a thermocouple from the inside to the outside of a vacuum chamber. US 3 563 575 and DE 27 54 055 disclose pipe couplings, for example. US 4277197 discloses a telescoping tool comprising a shoulder portion for engaging the right hand end of a tubular wedge for establishing a high frictional contact with the exterior surface of telescoping tube. US4457541 discloses a pipe coupling comprising an annular flange member having a tapered inner surface and a pipeengageable collet mounted in the flange member and having a tapered outer surface portion engaged with the tapered inner surface portion. The document "Vacuum and Pressure Feed-throughs" published by Fiberguide Industries, describes feed-throughs that are designed to allow optical fibers to penetrate a pressure vessel without compromising the integrity of the vacuum.

Feedthroughs find many applications and may for example allow the passage of cables or probes used to control and/or monitor vacuum deposition processes. A vacuum deposition process that requires a plurality of probes, such as thermocouples, is a process used for manufacturing thin-film photovoltaic devices. A plurality of probes are typically needed for manufacturing of thin-films onto large substrates, for example, within a vacuum chamber where portions of the substrate may be subjected to a controlled range of temperatures as it is transported within the chamber during the material deposition process.

In a general sense, a common problem in the field of feedthrough apparatuses relates to the establishing and preserving of a seal around the probe. For example, maintaining the seal's sealing function around the probe installed across the wall body and passing through the feedthrough apparatus.

One problem with feedthrough apparatuses is that a seal's sealing function may be established under a first environmental condition, but the sealing function may be lost when the apparatus is maintained at a second environmental condition. For example, a seal may form a seal at a first temperature but the sealing may be lost at a second temperature. A more common problem is for example that the sealing function may be lost after a number of temperature variation cycles. A problem is that material properties of components forming the seal may change as a result of the expansion and contraction of the seal components and/or material fatigue. A related problem is a loss of elasticity of components forming the seal, thereby allowing leaks to form as thermal expansion and contraction modify the seal's geometry. For example, components of the feedthrough and the probe, which may be a rod-shaped probe, may have different thermal expansion coefficients, or be exposed to different levels of heat, and therefore expand and contract differently, thereby causing relative movement between the components that degrades the feedthrough's sealing function.

Another problem is that a seal ordinarily achieves a sealing function by compressing or deforming at least one component. For example, a feedthrough ordinarily comprises at least one O-ring that is compressed within a gland and presses against the probe that is configured to extend through the feedthrough. A problem is that if the probe is made of a material that is relatively soft and bendable, the probe's cross-section shape or area at the seal may progressively be reduced or modified by temperature cycling, thereby resulting in a loss of sealing function. A problem is that thermocouples are ordinarily made of relatively soft and bendable material and are therefore subject to fluctuations in cross-sectional dimensions upon thermal cycling within a feedthrough apparatus.

A further problem is that physical disturbance of the probe may result in a loss of the feedthrough's sealing function. For example, operators of the system comprising the feedthrough may have to adjust the shape of the probe after it has been mounted in the feedthrough, which may displace the probe along the feedthrough's through-axis. Such adjustment may for example be needed during the development of a vacuum chamber used for thin-film deposition. Another cause of problematic physical disturbance may occur when an operator cleans a vacuum chamber and the cleaning operation results in physical contact with the probe, thereby resulting in unwanted stress or strain on at least one sealing element in contact with the probe within the feedthrough apparatus, thereby accelerating ageing of the at least one sealing element or damaging the sealing element. For example, a force exerted by the operator on the probe may result in a torque or force that creates an unwanted displacement or deformation of the probe where it is in contact with the sealing element.

Yet another problem is that an operator may want to adjust the position of the probe by translating the probe through the feedthrough apparatus from a first position to a second position, so that the user can obtain a measurement at a second location within a vacuum chamber. A problem with such an adjustment is that it ordinarily results in a loss of sealing function. The loss of sealing function ordinarily requires the timeconsuming task of dismantling the feedthrough apparatus and replacing sealing components therein. A further problem is that even if translation to a second position resulted in a working sealing function, when the operator translates the probe back to the first position, the sealing function is ordinarily difficult to obtain. A reason for this difficulty is that the first sealing position may have caused a deformation of the probe, due to the tightening of the seal of the probe. It may therefore be a problem to obtain again a sealing function at the first location.

What is needed is a feedthrough device that addresses one or more of the problems of conventional feedthroughs discussed above.

### SUMMARY

The disclosure presents a solution to the problem of placing an elongated probe, across or through a wall body and forming a seal preventing the flow of gases from a first side to a second side of the wall body between the outer surface of the elongated probe and the wall body.

According to the invention, a feedthrough, for example for vacuum chambers for performing thermal processes, comprises, from a first side or surface at atmospheric pressure to a second side or surface at a pressure that is below atmospheric pressure: a gland body having an opening formed therethrough along a longitudinal axis thereof, the gland body being adapted to mate with a threaded opening formed through a first surface of a vacuum chamber wall body, and a seal device disposed between the gland body and a second surface of the wall body, wherein the seal device comprises: a bushing having a tapered outside diameter that contacts a tapered surface of the gland body, a washer having a first surface that is disposed over a surface of the bushing, and a ring seal that is disposed over a second surface of the washer and an internal surface of the vacuum chamber wall body, characterized in that the bushing comprises aluminum and has a channel.

For example, the bushing includes an apex having a first diameter at a first end thereof, and that tapers from the first diameter to a second diameter that is greater than the first diameter. For example, a percentage increase between the first diameter and the second diameter is greater than about 100%. For example, the bushing has a height dimension, and a percentage increase between the second diameter and the height dimension is about 100%. For example, the channel has a width and a ratio of the width to the first diameter is about 1:3. For example, the washer comprise a metallic material. For example, the gland body comprises stainless steel. For example, the bushing has a C-shape. For example, the feedthrough further comprises a vacuum chamber wall body.

### BRIEF DESCRIPTION OF THE DRAWINGS

So that the manner in which the above-recited features, advantages and objects of the present invention are attained can be understood in detail, a more particular description of the invention, briefly summarized above, may be had by reference to the embodiments thereof which are illustrated in the appended drawings.
Figures 1A and 1B are side cross-sectional views of the feedthrough according to the invention formed in a wall body having a probe disposed therein. The probe is shown as repositioned in Figure 1B.
Figure 1C is an enlarged cross-sectional view of the seal device of Figures 1A and 1B.
Figure 2A is an isometric view of the bushing according to the invention that may be used in the feedthrough of Figures 1A-1C.
Figure 2B is a top view of the bushing of Figure 2A.
Figure 2C is a cross-sectional view of the bushing along lines 2C-2C of Figure 2B.

To facilitate understanding, identical reference numerals have been used, wherever possible, to designate identical elements that are common to the figures.

It is contemplated that elements and/or process steps of one embodiment may be beneficially incorporated in other embodiments without additional recitation.

### DETAILED DESCRIPTION

A feedthrough according to embodiments disclosed herein provides a solution to the problem of placing an elongated device, for example a rod, wire, or tube, hereafter called a probe, across or through a wall body and forming a seal preventing the flow of gases from a first side to a second side of the wall body between the outer surface of the elongated device and the wall body. While the embodiments of the feedthrough are exemplarily described for installation of a probe, the feedthrough may be utilized for other applications, such as for fluid transmission, electrical or optical transmission through a solid or tubular element, a jacketed resistive heater, and other useful applications.

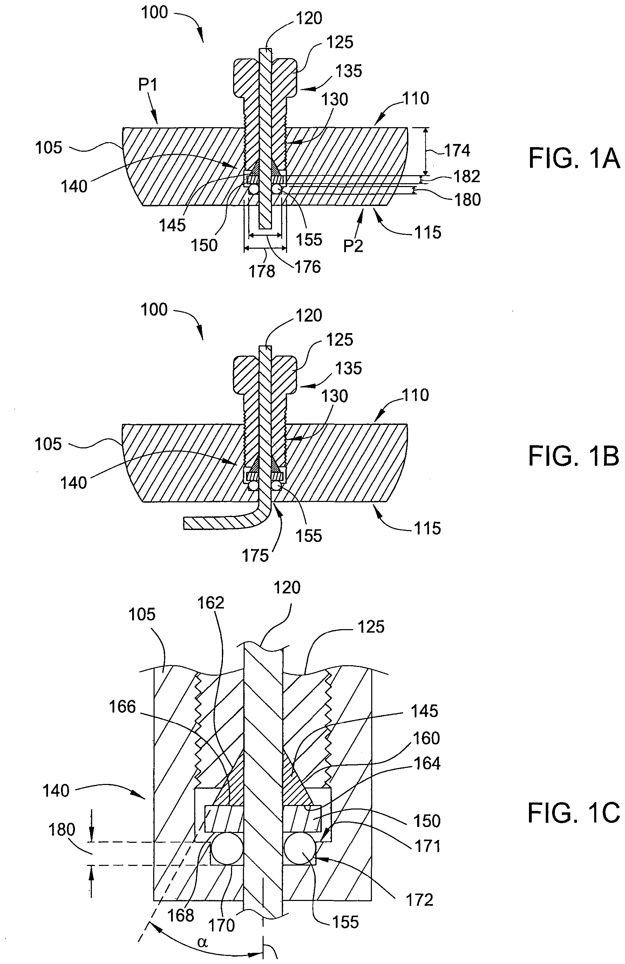

Figures 1A and 1C are a cross-sectional views of a feedthrough 100 installed in a wall body 105 of a chamber (not shown). The wall body 105 may be a sidewall of the chamber, a bottom or a top of the chamber, or a flange that couples to a body of the chamber. However, in some embodiments, the wall body 105 may include a threaded insert that is formed within or sealably affixed to a sidewall of the chamber. In this example, the wall body 105 need not be a permanent part of a larger chamber, and thus may be removed from the sidewall if some area of the feedthrough 100 becomes damaged during use. The chamber is a vacuum chamber for performing thermal processes on a substrate (not shown) in the manufacture of photovoltaic devices, or other electronic device fabrication processes. For example, the chamber may be utilized for deposition processes, such as a physical vapor deposition process, chemical vapor deposition (CVD) process or other deposition process wherein processing cycles include variations in pressure contained within the chamber. The pressures may include variations between a first pressure P1 (the pressure at a first side 110 of the wall body 105) that is at or near atmospheric pressure to a second pressure P2 that is below atmospheric pressure, such as pressures in the Torr range. The second pressure P2 (at a second side 115 of the wall body 105) may be a variable pressure that is equal to or near the first pressure P1 when the chamber is opened, as well as a pressure less than the first pressure P1 during processing.

The feedthrough 100 is shown having a probe 120 disposed in a gland body 125 from the first side 110 to the second side 115. The probe 120 is inserted into an aperture formed along a longitudinal axis 132 of the gland body 125. The gland body 125 is inserted into a threaded region 130 formed in the wall body 105. In some configurations, the threaded region 130 is concentric with an opening 175 and/or O-ring pocket 172, or also referred to herein as a ring seal pocket, formed in a portion of the wall body 105. The gland body 125 includes threads that interface with threads of the threaded region 130. The gland body 125 includes a head 135 that interfaces with a tool (not shown), such as a hex head wrench or hex socket wrench that may be utilized to rotate the gland body 125 relative to the wall body 105.

An end of the gland body 125 opposing the head 135 interfaces with a seal device 140. The seal device 140 includes a bushing 145, a washer 150 and a ring seal 155. The probe 120 is disposed through each of the respective elements along the longitudinal axis 132 of the gland body 125 to the second side 115 of the wall body 105.

Rotation of the gland body 125 in the threaded region 130 to tighten the gland body 125 in the threaded region 130 compresses the seal device 140 as will be explained in greater detail below. Compression of the seal device 140 effectively seals the threaded region 130 preventing pressure losses through the feedthrough 100. Sealing of the seal device 140 also allows the probe 120 to be bent, as shown in Figure 1B, without pressure losses through the feedthrough 100.

Figure 1C is an enlarged cross-sectional view of the seal device 140 of Figures 1A and 1B. The seal device 140 is at least partially made of metallic materials. The gland body 125 may be made of stainless steel, such as grade 1.4301 stainless steel (British Standards adopted by the European community (BS EN)) or grade 304 stainless steel (American Society for Testing and Materials (ASTM)). The gland body 125 may also be formed from other ASTM 300 or 400 series stainless steels. The bushing 145 is made of aluminum, such as grade 7075 aluminum. The washer 150 may be made of a material similar to the material of the bushing 145, such as grade 7075 aluminium. The ring seal 155 may be toroidal shaped and have a material cross-section that is round (e.g., Figures 1B-1C), oval, rectangular, c-shaped or other desirable cross-sectional shape. The material cross-section portion of the ring seal 155 may have a longitudinal thickness that may be the diameter, the edge length or other external dimensional length of the ring seal 155 that is parallel with the central axis of the ring seal 155. The ring seal 155 may be an O-ring made of a polymeric material, such as fluoropolymer elastomers, for example copolymers of hexafluoropropylene (HFP) and vinylidene fluoride (VDF or VF2), terpolymers of tetrafluoroethylene (TFE), vinylidene fluoride (VDF) and hexafluoropropylene (HFP) as well as perfluoromethylvinylether (PMVE). In one embodiment, the ring seal 155 comprises an O-ring available from DuPont Performance Elastomers L.L.C., sold under the trade name VITON®.

In one aspect, the dissimilar metals of the seal device 140 (e.g., stainless steel material of the gland body 125 and the aluminum material of the bushing 145) enhances the re-usability and sealing capabilities of the seal device 140, without the need for lubricants or other similar surface preparation measures required to prevent galling or other similar problems found with clean parts that are required for and used in vacuum environments. For example, the aluminum material of the bushing 145, which is softer relative to the stainless steel material of the gland body 125, may act as a bearing surface for the gland body 125.

The bushing 145 is a conical tapered member that includes a tapered outside diameter 160 that interfaces with a conical surface 162 of the gland body 125. One or both of the tapered outside diameter 160 and the conical surface 162 may include an angle "α" that is acute relative to the longitudinal axis of the gland body 125. From the longitudinal axis 132 of the gland body 125, the angle α may be about 15 degrees to about 60 degrees, for example, about 20 degrees to about 40 degrees, such as about 28 degrees to about 32 degrees, for example, about 30 degrees.

One or both of the tapered outside diameter 160 and the conical surface 162 may include a smooth surface to minimize friction therebetween. In one embodiment, both of the tapered outside diameter 160 and the conical surface 162 may include an average surface roughness (Ra) of about 1.6 micro meters or less.

A flat surface 164 of the bushing 145 contacts a first surface 166 of the washer 150 when the gland body 125 compresses the tapered outside diameter 160 of the bushing 145. A second surface 168 of the washer 150 in turn contacts the ring seal 155 when the bushing 145 is pressed against the first surface 166 of the washer 150, due to the translation of the gland body 125 in the thread of the threaded region 130. The longitudinal thickness of the material cross-section portion of the ring seal 155 is thus compressed between the second surface 168 of the washer 150 and an internal surface 170 of the wall body 105 within an o-ring pocket 172 formed in the wall body 105 below the washer 150. One or both of the first surface 166 and the second surface 168 of the washer 150 may include an average surface roughness (Ra) of about 1.6 micro meters or less.

As shown in Figure 1A, the gland body 125 may extend a first depth into the wall body 105 indicated by a length 174 of the threaded region 130. A diameter 176 of the washer 150 is slightly less than a diameter 178 of the threaded region 130 to allow the washer 150 to float freely above the ring seal 155 (while not under load) without binding in the threaded region 130. The diameter 178 of the threaded region 130 may be sized according to the size of the gland body 125 for a particular application. In some embodiments, the diameter 178 of the threaded region 130 may be sized for a gland body 125 having a diameter between about 2 millimeters (mm) to about 100 mm, such as about 4 mm to about 10 mm, for example, about 5 mm to about 7 mm, such as about 6 mm, in one embodiment.

As shown in Figures 1A and 1C, the o-ring pocket 172 may extend to a second depth into the wall body 105 that is defined by the sum of the length 174 of the threaded region 130, a thickness 182 of the washer 150, and a length 180 of the O-ring pocket 172, which ends at the internal surface 170 of the wall body 105. The length 180 of the o-ring pocket 172 is less than a diameter of the ring seal 155 to allow the washer 150 to float freely above the ring seal top surface 171 of the wall body 105 and the ring seal 155, when the ring seal 155 is un-compressed. The length 180 of the o-ring pocket 172 is also provided to be less than the diameter of the ring seal 155 to prevent contact between the second surface 168 of the washer 150 and the surface 170 during compression. In some embodiments, the length 180 is sized to provide a desired maximum amount of compression in the ring seal 155 and sealing force against the probe 120 when the second surface 168 is caused to contact the top surface 171 due to the application of a load to the ring seal 155 by the washer 150, bushing 145 and gland body 125.

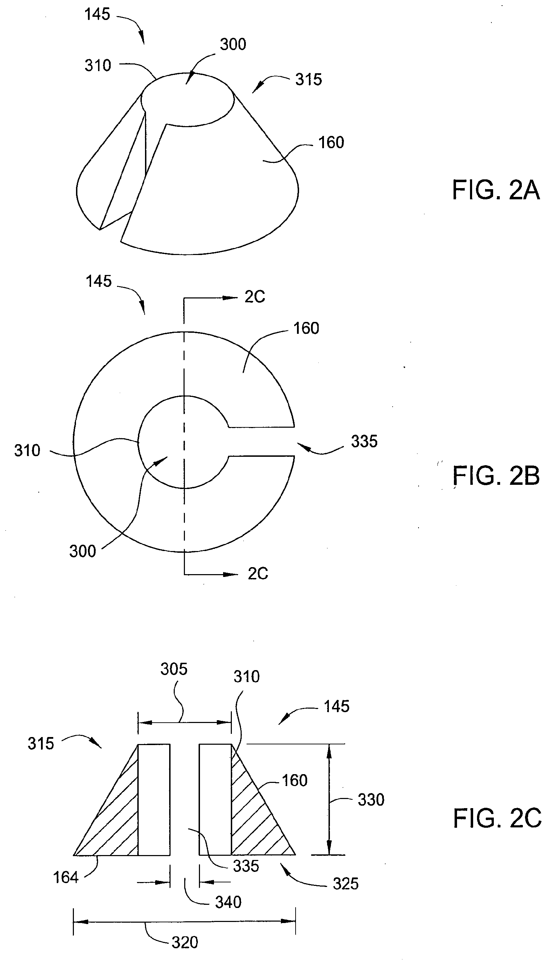

Figures 2A-2C are various views of one embodiment of the bushing 145. Figure 2A is an isometric view of the bushing 145. Figure 2B is a top view of the bushing 145 of Figure 2A. Figure 2C is a cross-sectional view of the bushing 145 along lines 2C-2C of Figure 2B.

The bushing 145 includes a central opening 300 that is sized to receive a probe (not shown), such as the probe 120 shown in Figures 1A-1C. The central opening 300 may include a first diameter 305 and an apex 310 at a first end 315 thereof. The first diameter 305 of the central opening 300 may be the same at a second end 325 thereof when the bushing 145 is not under load. The tapered outside diameter 160 of the bushing 145 tapers from the apex 310 to a second diameter 320 at the second end 325 thereof. The bushing 145 may also include a height dimension 330.

In some embodiments, the percentage increase between the first diameter 305 at the first end 315 of the bushing 145 (at the apex 310) and the second diameter 320 at the second end 325 is greater than about 100%. For example, if the first diameter 305 is about 1.6 mm and the second diameter 320 at the second end 325 of the bushing 145 is about 3.8 mm, the percentage increase is about 138%. In other embodiments, a percentage increase between the second diameter 320 of the bushing 145 and the height dimension 330 may be about 100%. For example, if the second diameter 320 at the second end of the bushing 145 is about 3.8 mm and the height dimension 330 is about 1.9 mm, the percentage increase is about 99.5%. In one embodiment, the percentage increase results in the angle "α" of the bushing 145.

The bushing 145 includes a channel 335 formed between the first end 315 to the second end 325. The channel 335 may be formed through the tapered outside diameter 160 to the central opening 300, and thus be described as being c-shaped. The channel 335 may be utilized to provide compliance and/or flexibility in the bushing 145 by allowing the first diameter 305 and/or the second diameter 320 to decrease when the bushing 145 is compressed by a force that is generated by the compression of the feedthrough 100 components by the movement of the gland body 125 in the threaded region 130. The channel 335 may include a width 340 that is variable depending on the load applied to the bushing 145. In one embodiment, the width 340 is related to the first diameter 305. For example, a ratio of the width 340 to the first diameter 305 is about 1:3, when it is uncompressed. As one example, if the width 340 is about 0.5 mm and the first diameter 305 is about 1.6 mm, the ratio is about 1:3.2.

The feedthrough 100 having the seal device 140 with the bushing 145 having the conical surface 162 clamps and seals at the same time and without damaging any part of the seal device 140. For example, rotation of the gland body 125 presses against the bushing 145, which presses against the washer 150 to clamp the probe 120 (*e.g*., by reducing the width 340 of the channel 335 of the bushing 145). The washer 150 then compresses the ring seal 155 against the O-ring pocket 172 to provide a seal in the threaded region 130. Additionally there is a good protection of the seal device 140 from aggressive atmospheres at the second side 115 of the wall body 105 due to the diameter of an opening 175 (shown in Figure 1B) in the second side 115 of the wall body 105. A diameter of the opening 175 may be substantially the same as the diameter of the probe 120 to prevent ingress of gases from the atmosphere at the second side 115 of the wall body 105 when the seal device 140 is in a compressed state. Testing of the feedthrough 100 as described herein have proven the sealing ability of the seal device 140 of the feedthrough 100. The design and material combination of the seal device 140 reduces friction, galling and wear while providing good reusability, reliability and leak tightness at the feedthrough 100. For high temperature applications, for example up to about 225 degrees Celsius, and/or highly corrosive applications, the ring seal 155 may be replaced with an o-ring available from DuPont Performance Elastomers L.L.C., sold under the trade name KALREZ®. For other applications (for example, low to medium vacuum) the washer 150 and/or the bushing 145 could be replaced by plastics which may be cheaper than the metallic parts. The feedthrough 100 can be built in different sizes for different applications. The feedthrough 100 for a probe such as the probe 120 may also be utilized in other applications where a wire, a tube, or a cable having a diameter that is substantially the same as the probe 120 may be used without modification to the feedthrough 100.

While the foregoing is directed to embodiments of the present disclosure, other and further embodiments of the invention may be devised without departing from the basic scope thereof. Therefore, the scope of the present disclosure is determined by the claims that follow.

## Claims

1. A feedthrough (100) for vacuum chambers for performing thermal processes, comprising, from a first side or surface (110) at atmospheric pressure to a second side or surface (115) at a pressure that is below atmospheric pressure:
a gland body (125) having an opening formed therethrough along a longitudinal axis (132) thereof, the gland body being adapted to mate with a threaded opening (130) formed through a first surface (110) of a vacuum chamber wall body (105); and
a seal device (140) disposed between the gland body and a second surface (115) of the vacuum chamber wall body (105), **characterized in that** the seal device (140) comprises:
a bushing (145) having a tapered outside diameter that is disposed over a tapered surface of the gland body;
a washer (150) having a first surface that is disposed over a surface of the bushing; and
a ring seal (155) that is disposed over a second surface of the washer and an internal surface of the vacuum chamber wall body (105), wherein the bushing comprises aluminum and has a channel (335).

2. The feedthrough of claim 1, wherein the bushing includes an apex (310) having a first diameter (305) at a first end thereof, and that tapers from the first diameter to a second diameter (320) that is greater than the first diameter.

3. The feedthrough of claim 2, wherein a percentage increase between the first diameter and the second diameter is greater than about 100%.

4. The feedthrough of claim 2, wherein the bushing has a height dimension (330), and a percentage increase between the second diameter and the height dimension is about 100%.

5. The feedthrough of claim 1, wherein the channel has a width and a ratio of the width to the first diameter is about 1:3.

6. The feedthrough of claim 1, wherein the washer comprises a metallic material.

7. The feedthrough of claim 1, wherein the gland body comprises stainless steel.

8. The feedthrough of claim 1, wherein the bushing has a C-shape.

9. The feedthrough of claim 1, further comprising a vacuum chamber wall body (105).

## Patentansprüche

1. Durchführung (100) für Vakuumkammern zur Durchführung thermischer Prozesse, umfassend, von einer ersten Seite oder Fläche (110) bei Atmosphärendruck zu einer zweiten Seite oder Fläche (115) bei einem Druck, der unter Atmosphärendruck liegt:
einen Stopfbuchsenkörper (125) mit einer durch ihn hindurch ausgebildeten Öffnung entlang einer Längsachse (132) davon, wobei der Stopfbuchsenkörper angepasst ist, um mit einer Gewindeöffnung (130) zusammenzupassen, die durch eine erste Oberfläche (110) eines Vakuumkammerwandkörpers (105) gebildet ist; und
eine Dichtungsvorrichtung (140), die zwischen dem Stopfbuchsenkörper und einer zweiten Oberfläche (115) des Vakuumkammerwandkörpers (105) angeordnet ist,
**dadurch gekennzeichnet, dass** die Dichtungsvorrichtung (140) umfasst:
eine Buchse (145) mit einem sich verjüngenden Außendurchmesser, die über einer sich verjüngenden Oberfläche des Stopfbuchsenkörpers angeordnet ist;
eine Unterlegscheibe (150) mit einer ersten Oberfläche, die über einer Oberfläche der Buchse angeordnet ist; und
eine Ringdichtung (155), die über einer zweiten Fläche der Unterlegscheibe und einer Innenfläche des Unterdruckkammerwandkörpers (105) angeordnet ist,
wobei die Buchse Aluminium umfasst und einen Kanal (335) aufweist.

2. Durchführung nach Anspruch 1, wobei die Buchse einen Scheitel (310) mit einem ersten Durchmesser (305) an einem ersten Ende davon umfasst und der sich vom ersten Durchmesser zu einem zweiten Durchmesser (320) verjüngt, der größer als der erste ist Durchmesser.

3. Durchführung nach Anspruch 2, wobei eine prozentuale Zunahme zwischen dem ersten Durchmesser und dem zweiten Durchmesser größer als etwa 100 % ist.

4. Durchführung nach Anspruch 2, wobei die Buchse eine Höhenabmessung (330) aufweist und eine prozentuale Zunahme zwischen dem zweiten Durchmesser und der Höhenabmessung etwa 100 % beträgt.

5. Durchführung nach Anspruch 1, wobei der Kanal eine Breite aufweist und ein Verhältnis der Breite zum ersten Durchmesser etwa 1:3 beträgt.

6. Durchführung nach Anspruch 1, wobei die Unterlegscheibe ein metallisches Material umfasst.

7. Durchführung nach Anspruch 1, wobei der Stopfbuchsenkörper Edelstahl umfasst.

8. Durchführung nach Anspruch 1, wobei die Buchse eine C-Form hat.

9. Durchführung nach Anspruch 1, ferner umfassend einen Vakuumkammerwandkörper (105).

## Revendications

1. Traversée (100) pour chambres à vide pour la réalisation de procédés thermiques, comprenant, d'un premier côté ou surface (110) à pression atmosphérique à un deuxième côté ou surface (115) à une pression inférieure à la pression atmosphérique :
un corps de presse-étoupe (125) traversé par une ouverture le long d'un axe longitudinal (132) de celui-ci, le corps de presse-étoupe étant adapté pour s'adapter à une ouverture filetée (130) formée à travers une première surface (110) d'un corps de paroi de chambre à vide (105); et
un dispositif d'étanchéité (140) disposé entre le corps de presse-étoupe et une seconde surface (115) du corps de paroi de chambre à vide (105),
**caractérisé en ce que** le dispositif d'étanchéité (140) comprend :
une douille (145) ayant un diamètre extérieur conique qui est disposée sur une surface conique du corps de presse-étoupe ;
une rondelle (150) ayant une première surface qui est disposée sur une surface de la douille ; et
un joint annulaire (155) qui est disposé sur une seconde surface de la rondelle et une surface interne du corps de paroi de la chambre à vide (105),
dans lequel la douille comprend de l'aluminium et a un canal (335).

2. Traversée selon la revendication 1, dans laquelle la douille comprend un sommet (310) ayant un premier diamètre (305) à une première extrémité de celui-ci, et qui se rétrécit du premier diamètre à un deuxième diamètre (320) qui est supérieur au premier diamètre.

3. Traversée selon la revendication 2, dans laquelle un pourcentage d'augmentation entre le premier diamètre et le deuxième diamètre est supérieur à environ 100 %.

4. Traversée selon la revendication 2, dans laquelle la douille a une dimension en hauteur (330), et un pourcentage d'augmentation entre le deuxième diamètre et la dimension en hauteur d'environ 100 %.

5. Traversée selon la revendication 1, dans laquelle le canal a une largeur et un rapport de la largeur au premier diamètre d'environ 1:3.

6. Traversée selon la revendication 1, dans laquelle la rondelle comprend un matériau métallique.

7. Traversée selon la revendication 1, dans laquelle le corps de presse-étoupe comprend de l'acier inoxydable.

8. Traversée selon la revendication 1, dans laquelle la douille a une forme de C.

9. Traversée selon la revendication 1, comprenant en outre un corps de paroi de chambre à vide (105).
